# EUROPEAN PATENT APPLICATION

(11) **EP 4 053 076 A1**
(43) Date of publication of application: **07.09.2022**
(21) Application number: 21171668.3
(22) Date of filing: 30.04.2021
(51) Int. Cl.: C01B 32/158, C01B 32/159

(54) **A DEVICE FOR ACTIVE MODIFICATION OF THERMAL RADIATION**

(30) Priority: 04.03.2021 GB 202103036
(71) Applicant: Advanced Material Development Limited, Surrey GU2 7YG (GB)
(72) Inventor: JOHNSTONE, James, Guildford GU2 7YG (GB); DALTON, Alan, Guildford GU2 7YG (GB); LYNCH, Peter, Guildford GU2 7YG (GB); LARGE, Matthew, Guildford GU2 7YG (GB); OGILVIE, Sean, Guildford GU2 7YG (GB)
(74) Representative: Bajjon, Alexander

(57) **Abstract**

The invention provides devices for active modification of thermal radiation, the devices comprising:
(i) a substrate;
(ii) one or more polymeric permeable membranes infused with an ionic liquid electrolyte;
(iii) one or more electrodes comprising carbon nanotubes deposited onto the surface of at least one of the one or more polymeric membranes; and
(iv) a protective encapsulation layer.

The invention also provides methods of making such devices.

## Description

### Introduction

This present invention relates to devices with low thermal emissivity containing carbon nanomaterials, methods of making such devices and applications of the devices.

### Background to the Invention

The active control of thermal emissivities from surfaces is important for a range of industrial applications which require the reduction of a thermal signature to assist in the overall heat efficiency and heat loss. For some applications, such as thermal regulation of buildings, it is desirable to reduce and control emissitivites commensurate with solar radiation profiles to reduce the energy costs of heating and cooling.

Carbon nanotubes are nanosized tubes constructed from rolled sheets of graphite. The tubes typically have a diameter in the range of 1 to 50 nanometres, but can have lengths in the micrometre range. Carbon nanotubes can be either single-walled (i.e. formed from a single rolled sheet of graphene) or multi-walled (i.e. formed from a plurality of concentric rolled sheets of graphene). Carbon nanotubes have attracted great interest due to their physical properties - namely their high tensile strength and high electrical conductivity.

2D materials are known to have many interesting and potentially useful properties, which differ from the properties of the corresponding bulk 3D material. For example, graphene is highly conductive and has applications in electrode structures as well as in conductive composites. The interesting functional properties of many materials are often only observed when the materials are in their mono- or few-layer (i.e. 2D) forms. However, to make use of these nanocarbon properties, convenient methods of isolating these forms are required. The strong interlayer dispersion forces must be overcome in order to exfoliate bulk three-dimensional (3D) materials to form the corresponding 2D materials. Liquid phase exfoliation and dispersion using high shear mixing is an accessible route towards producing formulated inks containing 2D materials which find uses in many industrial applications.

Salihoglu et al., Nano Lett. (2018), 18, 4541-4548 describes a graphene-based adaptive thermal camouflage device comprising a layer of graphene, a layer of a polyethylene membrane soaked with an ionic liquid and a layer of a gold electrode to form a planar capacitor. The graphene was deposited using a chemical vapour deposition technique, which does not easily lend itself to large scale production in the same manner that a liquid based and printable nanocarbon layer would.

There therefore remains the need for alternative devices for thermal camouflage, preferably those with improved properties, including improved scalability (for example, areal scalability).

### Summary of the Invention

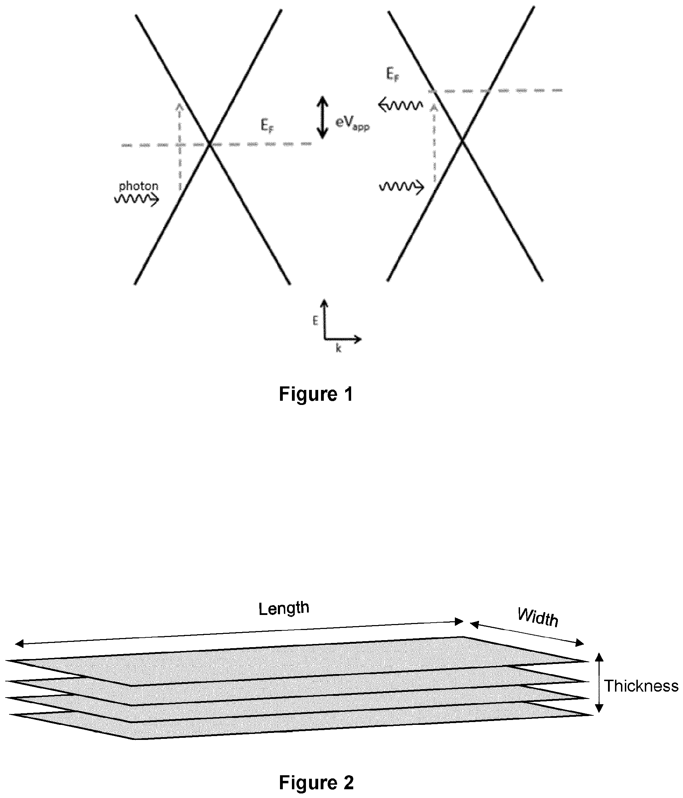

Without wishing to be bound by theory, the inventors believe that a thermally adaptive camouflage device comprising nanoparticulate graphite/graphene and/or carbon nanotubes can use the principle of Pauli Blocking to modify the band structure of graphene to block state transitions (see Figure 1). The band structure of graphene can be simplified and represented as a Dirac cone in which energy (E) is linear with momentum (k). In the ground state the Fermi Level, the state below which all states are occupied at absolute zero, rests close to the point of the cones. An incident photon would then cause excitation of an electron into an empty state causing an absorption event (Figure 1 - left). The Fermi level can be raised causing the occupancy of more states. If the same photon then interacts with the modified graphene the electron cannot be excited due to there being no available unoccupied state (Figure 1 - right).

This allows a graphene-based or carbon nanotube-based device that can have a emissivity of thermal radiation tuned by adjusting the Fermi level by applying a potential or by doping.

Large area devices of this type (when constructed using nanocarbon electrodes in planar electrolytic capacitors and integrated onto a suitable substrate) act to reduce the apparent emissivity of a thermal body. It has been found that devices made from nanocarbon materials are able to lower their emissivity due to their inherent electronic and resulting phonon effects when powered.

For large area devices, it is preferable for the fabrication method to be solution-based (rather than, for example, based around the transfer of ultra-thin film CVD deposited graphene). The construction of the electrolytic capacitor device also requires elements of a thin porous membrane separator and a liquid ionic electrolyte to be developed such that fast switching times and large observable differences can be obtained. Nanocarbon materials also exhibit a large surface area to volume ratio which assists the accumulation of charge on local surfaces. The operating range and switching times of these devices therefore is also driven by the physical properties of the electrolyte and the diffusivity into the internal structure of the electrode.

To enable the device's low power consumption and large area operation, it is preferred that the electrode film's internal resistive losses are minimised as far as possible by the use of conductive carbon nanomaterials (for example carbon nanotubes and/or graphite nanoplatelets).

Accordingly, in a first aspect, the invention provides a device for active modification of thermal radiation, the device comprising:
(i) a substrate;
(ii) one or more polymeric permeable membranes infused with an ionic liquid electrolyte;
(iii) one or more electrodes comprising carbon nanotubes deposited onto the surface of at least one of the one or more polymeric membranes; and
(iv) a protective encapsulation layer.

The one or more electrodes may comprise additional carbon nanomaterials, in addition to carbon nanotubes. For example, the electrodes may comprise carbon nanotubes together with graphite nanoplatelets and/or few layer graphene.

Preferably the device comprises a pair of electrodes. The electrodes may both comprise carbon nanotubes (and optionally additional carbon nanomaterials as described herein). Alternatively, when more than one electrode is present, the electrodes may be formed from different materials.

The device also comprises a protective encapsulation layer, which protects the electrodes and polymeric membranes from damage and/or degradation. This layer is preferably IR transparent so as not to interfere with the emissivity properties of the device. The protective encapsulation layer and may be flexible and polymeric in nature. The protective layer may prevent water vapour and/or oxygen molecules diffusing into the device, which reduces device lifetimes by facilitating unwanted chemical reactions. This layer is affixed onto the device and then sealed for operation.

The electrodes are deposited onto the polymeric membrane(s) such that the electrodes are in contact with polymeric membrane(s) to allow ionic/electron transport from the polymeric membrane(s) to the electrodes. These polymeric membrane(s) serve as separators to prevent electrical shorting between the electrodes. When a potential difference is applied to the pair of electrodes, the occupation of electrons in the Fermi level of the electrodes can be adjusted and therefore the thermal emissivity of the device can be altered.

As shown in the examples below, when a device according to the invention is positioned between a thermally radiating object and a detector, the thermal radiation detected by the detector is reduced. The devices of the invention can therefore effectively block thermal radiation from heat sources and therefore can act as thermal camouflaging devices. The devices for active modification of thermal radiation can therefore also be considered to be devices for camouflaging/concealing/masking/obscuring/suppressing thermal radiation.

Accordingly, the invention also provides a method of actively modifying (e.g. camouflaging/concealing) thermal radiation from an object, the method comprising placing a device as described herein between the object and a thermal radiation detector. The method may include covering or surrounding the object with a device as described herein.

The devices can be formed by depositing (e.g. printing or spraying) an ink containing the carbon nanomaterials onto one or onto a pair of polymeric membranes. The polymeric membrane(s) can be infused with the ionic liquid before or after the electrodes are deposited onto the membrane.

Accordingly, the invention also provides a method of making a device as described herein, the method comprising:
(a) depositing a liquid composition comprising carbon nanotubes (and optionally graphite nanoplatelets) onto at least one (e.g. both) of a first and second polymeric permeable membrane in order to form a film comprising carbon nanomaterials on the membranes;
(b) impregnating the first and second polymeric membrane with an ionic liquid; and
(c) securing the first and second polymeric membranes to each other.

Alternatively, the polymeric membranes may be impregnated with the ionic liquid before the liquid composition comprising carbon nanomaterials is printed onto the polymeric membrane. Accordingly, the invention also provides a method of making a device as described herein, the method comprising:
(a) impregnating first and second polymeric permeable membranes with an ionic liquid;
(b) depositing a liquid composition comprising carbon nanotubes (and optionally graphite nanoplatelets) onto at least one (e.g. both) of the polymeric membrane in order to form a film comprising carbon nanomaterials; and
(c) securing the first and second polymeric membranes to each other.

The methods above may also comprise the steps of securing the first and second polymeric membranes to a substrate and/or applying a protective encapsulation layer to the polymeric membranes.

The invention additionally provides devices obtained according to the methods described herein.

### Detailed Description of the Invention

The term "carbon nanomaterials" or "nanocarbon" as used herein refers to nanomaterials (i.e. materials having an average size from 1nm to 100nm in at least one dimension) that comprise or consist of carbon. Typically, the carbon nanomaterials comprise at least 90% or more by weight, preferably at least 95% or more by weight, for example 99% or more by weight of carbon. The term includes materials such as graphene, graphite nanoplatelets, single-walled carbon nanotubes, multi-walled carbon nanotubes, crystalline diamond, and diamond-like carbon (see the following ISO standard: ISO/TS 80004-3:2010).

As discussed above, the electrodes comprise carbon nanotubes (preferably single-walled carbon nanotubes). The electrodes may also comprise graphite nanoplatelets.

The carbon nanotubes may be single-walled carbon nanotubes or multi-walled carbon nanotubes, but preferably comprise or consist of single-walled carbon nanotubes. The carbon nanotubes typically have an outer mean diameter of from 1nm to 5nm, preferably from 1nm to 2nm (as determined by transmission electron microscopy) and may have a length of greater than 3µm, typically greater than 5µm, for example greater than 10 µm or greater than 15µm. Whereas the nanoplatelets described below are micron-sized in two dimensions, carbon nanotubes are only micron-sized in a single dimension (i.e. along their length).

The term "graphite nanoplatelets" as used herein (also referred to herein as "graphene nanoplatelets") refers to nanoparticles of graphite which consist of small stacks of a graphene. The term graphite nanoplatelets refers to nanoplatelets having on average 20 or fewer layers, typically 15 layers or fewer, preferably 10 or fewer layers. Layer numbers can be determined by UV-vis spectroscopy (see C. Backes et al., 'Spectroscopic metrics allow in-situ measurement of mean size and thickness of liquid-exfoliated graphene nanosheets', Nanoscale, 2016, doi: 10.1039/C5NR08047A).

The nanoplatelets typically have an average thickness of less than 30nm, for example less than 20nm. The term "thickness" as used herein refers to the dimension of the nanoplatelets along the axis of stacking of the layers within the nanoplatelets. The terms "length" and "width" refer to the longer and shorter dimensions of the nanoplatelets along perpendicular axes in the plane of the sheets of the layered materials respectively (see Figure 2). The nanoplatelets typically have an average length and/or width of 30nm or greater, preferably 50nm or greater or 100nm or greater. The nanoplatelets typically have an average length and/or width of 3.0µm or less, for example 2.0µm or less, typically 1.5µm or less, preferably 1µm or less, for example 800nm or less. The dimensions of the nanoplatelets can be measured using scanning or transmission electron microscopy. The nanoplatelets are typically only micron-sized in up to two dimensions (i.e. their length and width, with their thickness being significantly less than 1µm, for example less than 100nm). As mentioned above, these dimensions can be measured by transmission electron microscopy.

When present, the graphite nanoplatelets are typically present in the electrodes in an amount of from 25% (w/w), preferably from 30% (w/w), for example from 35% (w/w) and up to 50% (w/w), preferably up to 45% (w/w), for example up to 40% (w/w).

When the electrodes comprise a mixture of carbon nanotubes and graphite nanoplatelets, the carbon nanotubes may be present in the electrodes described herein in a weight ratio relative to the amount of graphite nanoplatelets of greater than 0.15:1 (carbon nanotubes:graphite nanoplatelets), preferably greater than 0.2:1 and in a ratio of up to 1:1, suitably up to 0.7:1, preferably up to 0.6:1.

For example, the carbon nanotubes are typically present in the electrodes in a weight ratio relative to the amount of graphite nanoplatelets of from 0.15:1 to 0.6:1 (carbon nanotubes:graphite nanoplatelets), preferably in a ratio of from 0.4:1 to 0.5:1.

Alternatively, the quantity of carbon nanotubes in the electrodes may be defined relative to the weight of the total composition. The carbon nanotubes are typically present in the electrodes composition in an amount of from 5% (w/w), preferably from 10% (w/w), for example from 15% (w/w) and up to 30% (w/w), preferably up to 25% (w/w), for example up to 20% (w/w).

Alternatively, when the electrodes comprise carbon nanotubes as the only carbon nanomaterial, the carbon nanotubes may be present in the electrodes in an amount of 50% or greater, preferably 75% or greater by weight, such as 90% or greater by weight, for example 95% or greater by weight,

The electrodes are typically deposited onto the polymeric membrane from a liquid composition (or "ink"). For example, liquid compositions comprising the carbon nanomaterials and a solvent (and optionally other thickening agents, binders and other additivities described below) can be sprayed or printed onto the polymeric membrane.

The solvent may be an aqueous or non-aqueous solvent. However, the solvent preferably is or comprises water (necessary for hydrogel formation). Alternatively, the solvent may be a dipolar aprotic solvent. Examples of such dipolar aprotic solvents include cyclopentanone, cyclohexanone, N-methylpyrrolidone (NMP), dimethylformamide (DMF), dimethylsulphoxide (DMSO), dimethylacetamide (DMAc), sulpholane, dihydrolevoglucosenone (Cyrene) and lactones, such as gamma-valerolactone.

The liquid compositions (containing carbon nanotubes and optionally additional carbon nanomaterials) may also include a thickening agent (which may also act as gelification agents) to increase the viscosity of the compositions. The increased viscosity ensures that the compositions are suitable for printing and also reduces tendency of the carbon nanomaterials to flocculate from suspension.

The thickening agent is preferably a hydrogel-forming thickening agent. The formation of a hydrogel matrix containing carbon nanotubes and additional carbon nanomaterials (for example, graphite nanoplatelets) results in a highly electrically conductive ink. The hydrogel-forming thickening agents are generally hydrophilic polymer chains which form a colloidal gel through hydrogen-bonding in water.

Examples of suitable thickening agents include:
- cellulose derivatives, such as carboxymethyl cellulose (CMC), methyl cellulose, hydroxy ethyl cellulose and carboxy ethyl cellulose, and salts thereof (such as sodium salts thereof);
- polymers such as polyethylene oxide (PEO), polypropylene oxide (PPO); polyanaline (PANI), polyvinylpyrrolidone (PVP), polyvinyl alcohol (PVA) and poly *N*-isopropylacrylamide (PNIPAAm);
- cyclodextrins;
- natural gelification agents such as xanthan gum, gelatine, glycerol, alginates, chitosan;
- inorganic silicas and clays such as bentonite, montmorillonites, laponite, nanosilica and titania; and
- filamentous or rod-like materials, for example those having an aspect ratio of greater than 100 (e.g. carbon nanotubes).

In a preferred embodiment, the thickening agent is a cellulose derivative, such as carboxymethyl cellulose. The term cellulose derivate as used herein refers to chemical derivatives of cellulose formed by functionalisation of some or all of the hydroxyl groups presence in cellulose (for example via etherification or esterification reactions). Derivatives can be formed by incorporation of one or more or all of carboxy, hydroxy, methyl, ethyl and/or propyl groups. Examples of cellulose derivatives include hydroxypropyl methylcellulose, hydroxypropyl cellulose, methyl ethyl cellulose, methyl cellulose and carboxymethylcellulose or a combination thereof, as well as cellulose itself. CMC is available in several forms (e.g. varying by degree of substitution and function) and can be crosslinked with several chemical agents either covalently or through hydrogen bonding networks with other agents to impart new properties which can be tailored according to requirements (Gels 2018, 4, 54; doi:10.3390/gels4020054).

Cellulose derivatives readily form hydrogels which are utilised in many industrial applications. These materials may also act as surface active agents which stabilise nanocarbon materials in aqueous solvents. Hydrogels exhibit ideal thixotropic behaviour due to their extended hydrogen bonding or supramolecular network formation behaviour. These networks serve to provide long range ordering to improve rheological behaviour.

The total concentration of the thickening agents may be in the range of 0.5% to 2% by weight of the total liquid composition (including the solvent), for example from 1% to 1.75% by weight of the total liquid composition.

The thickening agent increases the viscosity of the composition and it is envisaged that it also enables the carbon nanotubes to form a pre-ordered supramolecular network, which increases the conductivity of electrodes printed from the composition.

The viscosity of the composition is important to ensure that it can be printed to form a film. In addition, the composition should be viscous enough to prevent flocculation of the carbon nanomaterials within the composition. The precise viscosity will of course depend on the application of the composition (and the resulting film). The thickening agent also ensure that the inks have a viscosity suitable for printing, e.g. screen printing. The inks suitable for screen-printing are typically thixotropic and therefore their viscosity is dependent on shear rate. The liquid compositions (containing the carbon nanotubes and optionally additional carbon nanomaterials) may have a viscosity of from 100 to 1000 Pa.s at a shear rate of 0.1/s and/or may have a viscosity of from 1 to 10 at a shear rate of 100/s.

The liquid compositions may also include one or more surfactants. The surfactants are typically non-ionic surfactants. Examples of suitable non-ionic surfactants include polyethylene oxide-based (PEO) surfactants (e.g. Triton X-100), polypropylene oxide-based (PPO) surfactants, cyclodextrins and polyvinyl pyrrolidone (PVP) surfactants. However, ionic surfactants, such sulphate-based surfactants (such as sodium dodecyl sulphate) may also be used.

The total concentration of the surfactants may be in the range of 0.01% to 1% or 0.01% to 0.1% by weight of the total composition (including the solvent), for example from 0.02% to 0.05% by weight of the total composition.

The compositions may also comprise one or more solvents and or adhesives in order to improve adhesion of the dried film (formed by printing the ink) to a substrate. The nature and combinations of adhesives will of course be dependent on the substrate.

The compositions may also comprise one or more cross-linking agents in order to improve the rheological parameters of the ink and/or properties of resulting films. This may include a wide range of functional organic acids or bases such as ascorbic acid. Examples of further cross-linking agents include di- and tri-carboxylic acids, such as glutaric acid and trimesic acid. This crosslinking serves to stabilise films from rapid redissolution and effects of ambient humidity on conductivity.

In addition, the compositions may further comprise a setting agent, which is a material that cures upon exposure to heat or radiation to cure and set the liquid ink compositions into a solid film. These include photocurable monomers or infra-red activated agents, e.g. epoxides (which may undergo ring opening reactions), aldehydes or acids (which may undergo esterification reactions) such as citric acid.

The carbon nanomaterial-containing liquid compositions are deposited on a polymeric membrane as electrodes to form the device of the invention.

Preferably the device comprises a pair of electrodes. The electrodes may both comprise carbon nanotubes (and optionally additional carbon nanomaterials). Alternatively, the when more than one electrode is present, the electrodes may be formed from different materials. For example, a first electrode may comprise carbon nanotubes and a second electrode may be a metallic electrode. In this arrangement, typically, the electrode adjacent the substrate is non-carbon nanomaterial containing electrode.

The device preferably comprises a pair of electrodes comprising carbon nanotubes (and optionally further carbon nanomaterials, such as graphite nanoplatelets). However, devices of the invention may comprise a first carbon-containing electrode and a second electrode, which has a different composition to the first electrode. For example, the second electrode may be a metallic electrode, such as a gold, silver or copper electrode.

The polymeric permeable membrane is a dielectric material and is therefore electrically insulating. The polymeric membrane is also capable of holding an ionic liquid (in a similar manner to a capacitor or battery device). For example, the polymeric membrane may comprise polyethylene, polypropylene, polyvinylidene fluoride (PVDF), polyimide, cellulose, a cellulose derivative, or a mixture thereof. In preferred embodiments, the polymeric membrane is a polyethylene (PE) membrane, a polypropylene (PP) membrane or a PE/PP membrane.

The ionic liquid is preferably a room temperature ionic liquid. Room temperature ionic liquids (RTIL) are a class of liquids with a low melting point that allow conductivity due to their ionic nature. The ionic liquid preferably has an electrochemical window of (plus/minus) 4V or greater, for example 4.5V or greater.

As the devices described herein may be exposed to the environment in use, they should be able to be operated sufficiently in ambient conditions. Water present in the air is one possible source of detrimental effects due to the low potential window of water to electrolysis (1.23V) as well as material interaction considerations. Accordingly, the ionic liquids are preferably hydrophobic ionic liquids.

Examples of a suitable ionic liquids for use in the devices described herein are diethylmethyl(2-methoxyethyl)ammonium salts, including diethylmethyl(2-methoxyethyl)ammonium bis(trifluoromethylsulfonyl)imide ([DEME][TFSI]) and [DEME][BF₄], as well as 1-ethyl-3-methylimidazlium salts, e.g. EMI-BF₄. Alternatively, the ionic liquid may be a lithium-based ionic liquid (i.e. an ionic liquid wherein the cation is Li⁺), for example LiClO₄ or Li[TFSI].

The device may have a laminar structure wherein a sheet (or sheets) of the polymeric membrane is/are sandwiched between the electrode films and the combination of the polymeric membrane(s) and electrode(s) are mounted on a substrate.

The substrate may be comprised of a rigid or flexible planar material which may comprise of a continuous organic polymer, silicate based glass or a conductive metallic sheet. The substrate may also be metalised by various means to facilitate an efficient electrode. This substrate may be coated with nanocarbon material to aid industrial production.

Devices may be protected from ambient moisture ingress using a top encapsulation substrate atop the device. This barrier layer may comprise one or more layers of continuous material. Such encapsulation layers may be formed from suitable barrier materials with low absorption characteristics in the IR spectrum, such as poly(ethylene), flexible glass, quartz, sapphire, alkali metal halides, polycarbonates and poly(methyl)methacrylate.

The assembled laminar structure of the polymeric membrane(s) and electrode(s) typically has a thickness of less than 1cm, for example less than 500 microns, but typically greater than 10 microns. The layers of the laminar structure typically have a surface area of greater than 20cm², typically greater than 100cm².

The device is connectable or connected to a power source, for example a battery. More specifically, a power source is connectable or connected to the electrodes of the device. The potential difference applied across the electrodes by the power source alters the Fermi level of the carbon nanomaterials (e.g. the graphite nanoplatelets) within the electrodes to provide a thermal camouflaging effect.

The device may also comprise one or more switches or control circuitry for controlling the supply of power to the electrodes or varying the potential difference supplied by the power source to the electrodes of the device.

The device preferably also includes a pair of polymeric permeable membranes to facilitate the manufacture of the device. Using two polymeric membranes, a pair of identical polymeric membranes onto which the carbon nanomaterials have been printed can be assembled together in a symmetric manner to provide a device for active modification of thermal radiation. For example, the device may comprise a pair of polymeric membranes, wherein an electrode has been deposited onto a surface of each of the polymeric membranes. The polymeric membranes can be brought together to form a symmetrical device having a similar structure to a battery or capacitor.

In exemplary embodiments, the invention provides a device for active modification of (e.g. camouflaging) thermal radiation, the device comprising:
(i) one or more polymeric permeable membranes comprising polyethylene, polypropylene, or a mixture thereof infused with an ionic liquid; and
(ii) one or more electrodes comprising carbon nanotubes (and optionally graphite nanoplatelets).

In one embodiment, the invention provides a device for active modification of (e.g. camouflaging) thermal radiation, the device comprising:
(i) a pair of polymeric permeable membranes comprising polyethylene, polypropylene, or a mixture thereof infused with an ionic liquid; and
(ii) electrodes comprising carbon nanotubes (and optionally graphite nanoplatelets) deposited onto one surface of each of the polymeric membranes.

In a further aspect, the invention provides a method of making a device as described herein, the method comprising:
(a) depositing a liquid composition comprising carbon nanotubes (and optionally graphite nanoplatelets) onto at least one of a first and second polymeric permeable membranes in order to form a film comprising carbon nanomaterials on the membranes;
(b) impregnating the first and second polymeric membrane with an ionic liquid; and
(c) securing the first and second polymeric membranes to each other.

Alternatively, the polymeric membranes may be impregnated with the ionic liquid before the liquid composition comprising carbon nanomaterials is printed onto the polymeric membrane. Accordingly, the invention also provides a method of making a device as described herein, the method comprising:
(a) impregnating first and second polymeric permable membranes with an ionic liquid;
(b) depositing a liquid composition comprising carbon nanotubes (and optionally graphite nanoplatelets) onto at least one of the polymeric membrane in order to form a film comprising carbon nanomaterials;
(c) securing the first and second polymeric membranes to each other.

The liquid compositions comprising carbon nanomaterials and the polymeric membranes used in these methods may have the properties or features of the compositions and membranes described with reference to the devices disclosed herein.

Preferably the liquid composition comprising carbon nanomaterials is deposited (e.g. printed) onto both the first and second polymeric membranes.

In step c), the polymeric membranes are typically secured together so that uncoated surfaces of the two polymeric membranes (i.e. surfaces of the membranes that have not had a carbon nanomaterial-containing liquid composition deposited onto them) are in contact with each other.

The deposition steps may be conducted by spraying or printing the liquid composition onto the polymeric membrane. A wide variety of printing techniques can be used including screen printing, flexographic, offset lithographic, slot-die coating, doctor blade coating or inkjet printing.

Impregnation steps may be conducted by applying the ionic liquid to the surface of the polymeric membrane and applying a vacuum.

The methods above may also comprise the steps of securing the first and second polymeric membranes to a substrate and/or applying a protective encapsulation layer to the polymeric membranes.

The methods may include the step of obtaining a liquid composition, wherein the liquid composition comprises graphite nanoplatelets and single-walled carbon nanotubes. According, prior to step a) above, the method may comprise the following steps:
(i) obtaining exfoliated graphite nanoplatelets;
(ii) obtaining exfoliated single-walled carbon nanotubes; and
(iii) dispersing the exfoliated graphite nanoplatelets, exfoliated single walledcarbon nanotubes, a thickening agent and optionally a surfactant, in a solvent.

To ensure homogenous mixing of the nanoplatelets and carbon nanotubes, the mixture in step iii) may be subjected to a high shear mixing stage. In addition, a further step of compressing (e.g. roll milling) the ink may take place to degas the ink. This facilitates printing of the inks onto membranes.

The invention also provides devices obtained according to the methods described herein. The invention also provides a method of camouflaging/concealing thermal radiation from an object, the method comprising placing a device as described herein between the object and a thermal radiation detector.

### Brief Description of the Drawings

Figure 1 illustrates the principle of Pauli Blocking to modify the band structure of graphene to block state transitions.
Figure 2 is a schematic diagram showing the respective width, length and thickness of layered nanoplatelets.
Figures 3 and 4 show scanning electron microscopy (SEM) images of the printed inks described in Example 2 below.
Figure 5A schematically shows the construction of a device according to one embodiment of the invention.
Figure 5B schematically shows the construction of a device according to a further embodiment of the invention and shows a substrate and protective encapsulation layer.
Figures 6A to 6C are thermal images showing the change of thermal emissivity of the device described in Example 3 on a hotplate at 55°C
Figure 7 shows a plot of temperature (as recorded by infrared thermal imaging) against time after the device described in Example 3 below has been turned on.
Figure 8A shows a plot of temperature (as recorded by infrared thermal imaging) against time over a range of temperatures during a change of voltage applied to the device for a device as described in Example 3, but wherein the electrodes comprise only carbon nanotubes
Figure 8B summarises the temperature changes shown in Figure 8A as a function of the temperature of the body behind the device.

### Examples

### Example 1 - Exfoliation of Graphite to form Nanoparticulate Graphite

Graphite flakes were exfoliated using the apparatus and process described in International Patent Application No. PCT/EP2019/077579 to obtain nanoparticulate graphite with a distribution of lateral sizes of on average approximately 1µm and an average thickness of approximately 10 layers.

In summary, fine graphite powder (1-50 µm flake sizes produced by air classification of milled powder) was dispersed into a surfactant-water system and added to the inlet reservoir of a high-pressure homogeniser (such as the apparatus described in International Patent Application No. PCT/EP2019/077579). The fluid was then pressurised and accelerated under decompression before exiting the process cell of the homogeniser into a heat exchanger. Once the fluid was cooled to a temperature maintained by an external chiller system, it was either collected or recirculated, depending on the system configuration.

Once the graphite had been processed, the exfoliated mixture was centrifuged at 5000 g for 20 minutes to remove all unexfoliated crystallites and larger fragments. These parameters sedimented all but the few-layer nanosheets (i.e. the nanoparticular graphite) present. The nanoparticulate graphite obtained had a distribution of lateral sizes and thicknesses ranging from 50 to 2000 nm and up to -20 nm respectively.

### Example 2 - Electrode Ink Formulations

The composition is given in the table below for a batch of an ink prepared. The total solids content of the prepared ink (including binders etc.) was approximately 3.7wt%.

| **Material** | **Mass (9)** | **Fraction of dry film (wt%)** |
|---|---|---|
| Nanoparticulate Graphite (obtained as described in Example 1) | 3.10 | 40 |
| Single-Walled Carbon Nanotubes (Tuball Batt-H2O SWCNTs supplied by OCSiAl) | 1.54 | 20 |
| Carboxymethylcellulose (sodium salt) | 2.70 | 34 |
| Triton X-100 | 0.50 | 6 |

To make the ink, the components were weighed into a suitable container. In order to sufficiently lower the viscosity to blend the components, the mixture was heated under mixing (hotplate at 60°C) using a Silverson L5M-A laboratory high-shear mixer, operating at 5000 rpm. The mixture was then mixed for 5 minutes.

The graphite nanoplatelets have a distribution of lateral sizes of from 50nm to 800nm and have thicknesses of up to around 20nm. The viscosity of the ink was measured over a shear rate of 0.1/s to 100/s and the inks were found to be thixotropic.

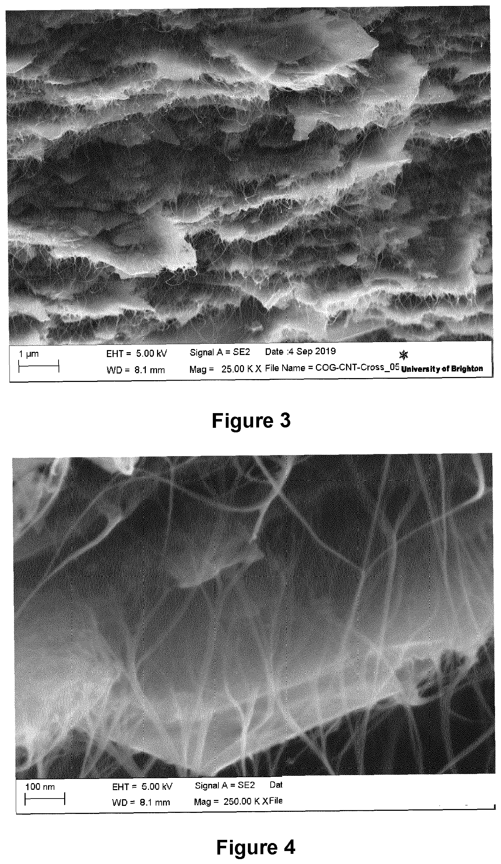

Structural characterisation was performed by SEM, indicating that there is a dense network of carbon nanotubes that exists in the interstitial spaces between packed graphite nanoplatelets (see Figures 3 and 4).

The inks were successfully printed on a range of substrates including several grades of polyethylene terephthalate (PET) substrate (DuPont Tejin ST504 & Felix Scholler F40100) and paper substrates.

### Example 3 - Film Deposition and Device Assembly

The ink of Example 2 was diluted by a factor of 20 to enable spray deposition. The diluted ink was sprayed onto a PE/PP Celgard membrane (2340). The optimum performance was found at a film thickness of approximately 20mm. The resulting film exhibited a sheet resistance of approximately 100 Ohms/sq.

The film thickness was measured via SEM cross-sectional analysis or scanning probe profilometry and the conductivity and thickness were used to calculate the specific conductivity. The conductivities of the printed films were measured using a four-point probe, in accordance with International Electrotechnical Commission standard IEC TS 62607-2-1:2012.

Conductivities of up to 500 kSm⁻¹ were observed for the printed films.

200µL/cm² of the ionic liquid, diethylmethyl(2-methoxyethyl)ammonium bis(trifluoromethylsulfonyl)imide, [DEME][TFSI], was infiltrated into the Celgard membrane by pipetting the ionic liquid onto the surface of the membrane and leaving at 100bar for 30minutes. The symmetrical device was then assembled by layering 2 films such that the printed, carbon-containing films had a pair of ionic liquid infiltrated Celgard membranes separating the two electrodes.

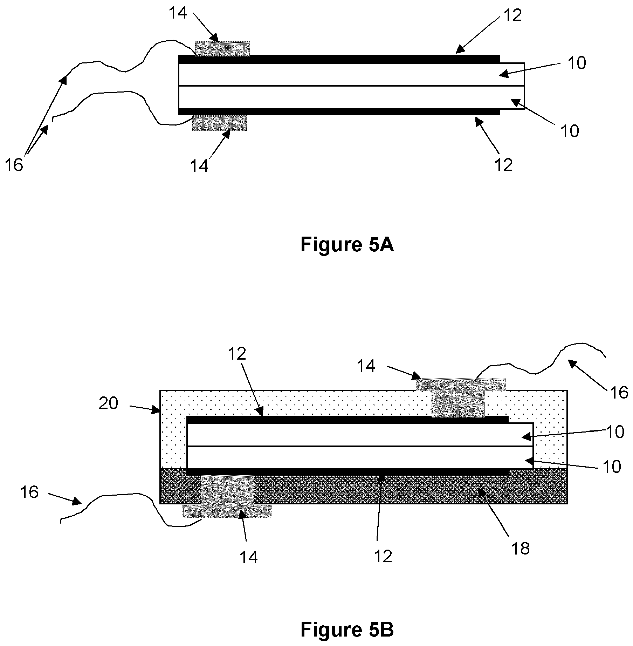

The structure of the device is shown schematically in Figure 5A. The device comprises a pair of ionic liquid infiltrated Celgard membranes (10). On one side of each membrane is a film (12) printed from the ink described in Example 2. These printed films act as electrodes for the device. Electrical contacts were made with the electrodes using copper tape (14) and were connected to a voltage source by wires (16).

The structure of an alternate device, which comprises a substrate and a LDPE, IR-transparent protective layer, is shown in Figure 5B. The structure of the device in Figure 5B comprises an arrangement substantially as shown in Figure 5A. However, the device also comprises a PET substrate (18) and a protective encapsulation layer (20) formed from LDPE (low density polyethylene). Copper connectors (14) penetrate through the substrate (18) and protective layer (20) to allow for connection of the electrodes (12) to an external voltage/power source via wires (16).

### Example 4 - Device Operation

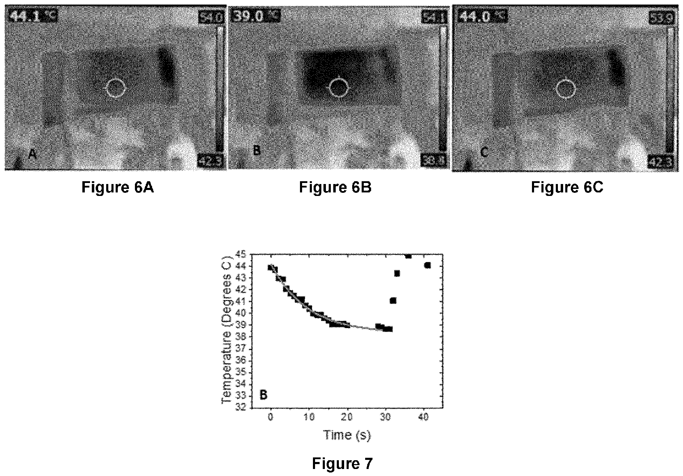

Figures 6A to 6C shows the change of thermal emissivity of the device described in Example 3 on a hotplate at 55°C. Figures 6A to 6C were obtained using an FLIR C2 thermographic camera. The temperatures indicated at the top left of each Figure indicate the temperature measured at the circle displayed at the centre of each image.

Figure 6A shows the device in Example 3 on a hotplate at 55°C with no potential difference applied to the device (i.e. with the device in a non-functioning state).

After a potential difference of 5V was applied to the two carbon-based electrodes of the device, the device took approximately about 20 seconds to reach a minimum temperature. This is shown in Figure 6B.

Figure 6C shows the temperature of the device 10 seconds after the potential difference was removed from the device.

A plot of temperature (as recorded by infrared thermal imaging - see Figures 6A to 6C) against time as shown in Figure 7. This shows that there was an overall temperature drop of 5°C once the device was switched on which takes about 20 seconds. Plotting the data with an exponential decay yields a time constant of about 9.5 seconds.

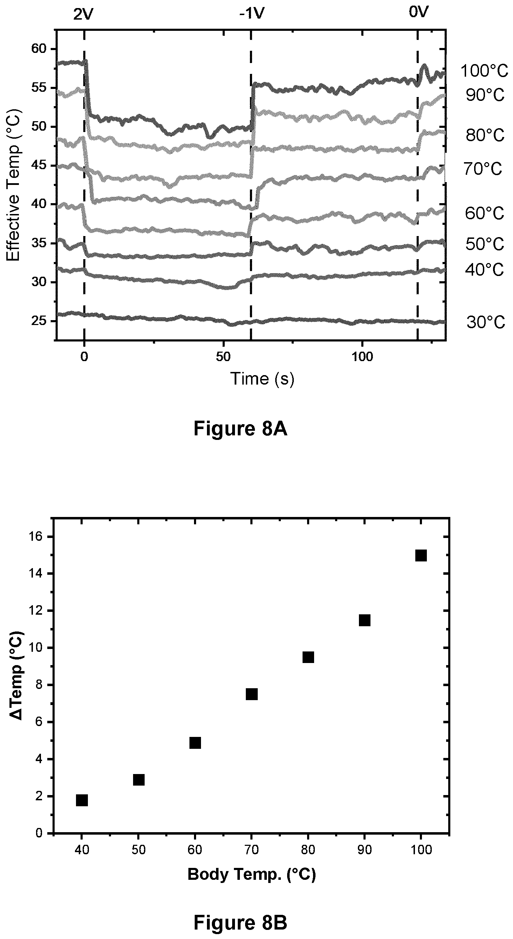

A similar effect was seen with a device formed as described in Example 3, but wherein the electrodes comprised only carbon nanotubes (rather than being formed from the ink described in Example 2). This is shown in Figure 8A.

For this experiment, a device as described in Example 3 above was formed, but wherein the electrodes were formed solely from carbon nanotubes (rather than a combination of graphite nanoplatelets, carbon nanotubes and carboxymethylcellulose). The voltage applied to the device over the time period measured is shown at the top of the graph of Figure 8A. Figure 8A shows the measured temperature of a body placed behind the device (relative to the infrared temperature sensor). Figure 8A shows the ability for the device to modulate the apparent temperature of the body over a range of temperatures from 30°C to 100°C.

Figure 8B shows the change in temperature (shown in Figure 8A) as a function of the temperature of the body (whose temperature is being measured/modulated).

The series of recorded emissivities at different temperatures demonstrates the fast device switching and effectiveness in lowering of apparent temperature.

## Claims

1. A device for active modification of thermal radiation, the device comprising:
(i) a substrate;
(ii) one or more polymeric permeable membranes infused with an ionic liquid electrolyte;
(iii) one or more electrodes comprising carbon nanotubes deposited onto the surface of at least one of the one or more polymeric membranes; and
(iv) a protective encapsulation layer.

2. A drevice according to claim 1 wherein the one or more electrodes further comprise graphite nanoplatelets.

3. A device according to claim 2 wherein the carbon nanotubes and graphite nanoplatelets are present in the electrodes in a weight ratio of from 0.15:1 to 0.6:1 (carbon nanotubes:graphite nanoplatelets).

4. A device according to any one of claims 1 to 3 wherein the polymeric membrane(s) is/are disposed between a pair of electrodes.

5. A device according to any one of claims 1 to 4 comprising single-walled carbon nanotubes, optionally having a mean diameter of from 1nm to 5nm and/or a length of greater than 3µm.

6. A device according to any one of claims 1 to 5 wherein the electrodes further comprise a thickening agent, for example carboxymethylcellulose.

7. A device according to any one of claims 1 to 6 wherein the polymeric membrane comprises polyethylene, polypropylene or a mixture thereof.

8. A device according to any one of claims 1 to 7 wherein the ionic liquid has an electrochemical window of 4V or greater.

9. A device according to any one of claims 1 to 8 which is connectable or connectable to a power source.

10. A device according to claim 1 comprising:
(i) one or more polymeric permeable membranes comprising polyethylene, polypropylene, or a mixture thereof infused with an ionic liquid;
(ii) one or more electrodes comprising a mixture of graphene nanoplatelets and carbon nanotubes in a weight ratio from 0.15:1 to 0.6:1 (carbon nanotubes:graphite nanoplatelets) deposited onto the surface of at least one of the one or more polymeric membranes.

11. A device according to claim 1 comprising:
(i) one or more polymeric permeable membranes comprising polyethylene, polypropylene, or a mixture thereof infused with an ionic liquid;
(ii) a pair of electrodes comprising a mixture of carbon nanotubes in a weight ratio from 0.15:1 to 0.6:1 (carbon nanotubes:graphite nanoplatelets) deposited onto the surface of the one or more polymeric membranes.

12. A method of making a device according to any one of claims 1 to 11, the method comprising:
(a) depositing a liquid composition comprising carbon nanotubes (and optionally graphite nanoplatelets) onto at least one of a first and second polymeric permeable membranes in order to form a film comprising carbon nanomaterials on the membranes;
(b) impregnating the first and second polymeric membrane with an ionic liquid; and
(c) securing the first and second polymeric membranes to each other.

13. A method according to claim 12 wherein step a) comprises depositing (e.g. printing) a liquid composition comprising carbon nanomaterials in a weight ratio from 0.15:1 to 0.6:1 (carbon nanotubes:graphite nanoplatelets) onto both first and second polymeric membranes.

14. A method of making a device according to any one of claims 1 to 11, the method comprising:
(a) depositing a liquid composition comprising carbon nanomaterials in a weight ratio from 0.15:1 to 0.6:1 (carbon nanotubes:graphite nanoplatelets) onto both first and second polymeric permeable membranes in order to form a film comprising carbon nanomaterials on the membranes;
(b) impregnating the first and second polymeric membrane with an ionic liquid; and
(c) securing the first and second polymeric membranes to each other.

15. A method of camouflaging/concealing thermal radiation from an object, the method comprising placing a device according to any one of claims 1 to 11 between the object and a thermal radiation detector.
